# EUROPEAN PATENT SPECIFICATION

(11) **EP 2 950 484 B1**
(45) Date of publication and mention of the grant of the patent: **19.09.2018**
(21) Application number: 15172848.2
(22) Date of filing: 31.03.2011
(51) Int. Cl.: H04L 12/28, H04L 29/06, H04L 12/801

(54) **DEVICE CONTROL METHOD, NETWORK DEVICE, AND NETWORK SYSTEM**
VORRICHTUNGSSTEUERUNGSVERFAHREN, NETZWERKVORRICHTUNG UND NETZWERKSYSTEM
PROCÉDÉ DE COMMANDE DE DISPOSITIF, DISPOSITIF ET SYSTÈME DE RÉSEAU

(30) Priority: 31.03.2010 CN 201010137702
(43) Date of publication of application: 02.12.2015
(62) Divisional of application: 11762010.4
(73) Proprietor: Huawei Device Co., Ltd., Longgang District Shenzhen Guangdong 518129 (CN)
(72) Inventor: WU, Huangwei, Shenzhen, Guangdong 518129, P.R. (CN); ZHU, Yu, Shenzhen, Guangdong 518129, P.R. (CN); FANG, Ping, Shenzhen, Guangdong 518129, P.R. (CN); ZHANG, Qinliang, Shenzhen, Guangdong 518129, P.R. (CN)
(74) Representative: Gill Jennings & Every LLP

(56) References cited:
- EP-A1- 1 445 972
- EP-A1- 1 777 883
- US-A1- 2007 061 474

## Description

### FIELD OF THE INVENTION

The present invention relates to network device interworking and control technologies, and in particular, to a device control method, a network device, and a network system.

### BACKGROUND OF THE INVENTION

Currently, with development of digital homes and digitization of consumer electronic products, more and more digital entertainment devices and electrical appliances appear in homes. A digital home network concept that is proposed in the art and is tried to be implemented is to connect these devices and products into a home network in a wired or wireless manner to implement such functions as content sharing or mutual control.

To implement interworking and control between various different home devices, more and more home network devices support a UPnP (Universal Plug and Play, universal plug and play) function. In a UPnP system, a user controls home devices through a control device in a home network, where the control device is generally called a CP (Control Point, control point). The CP, by using a UPnP protocol and invoking a related control command of a UPnP device, reads state information of the UPnP device in the home network, and controls the UPnP device to execute a corresponding operation. An existing UPnP protocol allows multiple CPs to simultaneously control a controlled device.

EP1777883A1 discloses a method and apparatus exclusively control a device in a home network. A control point requests exclusive control authority form the device. In response to the request the control point receives an identifier (RID) used to successfully authenticate the exclusive control authority. The control point then acquires the exclusive control authority and controls the device. Thus other control points are prevented from interfering with the device so as not perform an operation.

EP1445972A1 relates to a remote control system includes a plurality of control object terminals, a control sever to control the control object terminals and a remote control terminal. The remote control terminal issues a control request for a specific terminal of the plurality of control object terminals to the control sever. The control server identifies the remote control terminal uniquely in response to the control request and carries out the control request in place of the remote control terminal when the remote control right of the specific terminal is allocated to the remote control terminal.

WO2009/128163A1 provides a car AV system. When receiving the exclusive control right setting request from the car navigation apparatus 13, the exclusive control managing unit 206 determines whether or not to accept the exclusive control right setting request and set the exclusive control right to the amplifier 17. When accepting the exclusive control right setting request, the exclusive control managing unit 206 sets the exclusive control right to exclude the intervention by other apparatus to the amplifier 17, and transmits the exclusive control right setting response to the car navigation apparatus 13.

WO2007/086652A1 relates to a service provided by a universal plug and play (UPnP) device. A control point (CP) calls an action that reserves a specific command to be performed at a specific time and a device receives the call of the action so that the specific command can be performed at the specific time, thereby reserving functions of the UPnP device.

US 2007/0061474 A1 discloses approaches for reserving a printing device.

During the implementation of embodiments of the present invention, the inventor finds that the prior art has at least the following problems:
1. The existing UPnP protocol allows multiple CPs to simultaneously control a controlled device. Therefore, when a user operates a certain device, another CP may perform such an interference operation as restart on the device, thereby causing an operation failure of the user.
2. Ordinary access to a device affects efficiency of a major operation on the device.

### SUMMARY OF THE INVENTION

Embodiments of the present invention provide a device control method, a network device, and a network system, so as to avoid interference with a major operation on a controlled device when multiple control devices simultaneously access the controlled device.

Aspects of the invention are provided in the attached claims.

With the device control method, the network device, and the network system provided in the embodiments of the present invention, in an environment where multiple control devices may control a controlled device, the controlled device enters an exclusive mode according to an exclusive control request from a control device, that is, the controlled device determines which control device may temporarily monopolize the controlled device; within valid time of the exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are ensured, thereby avoiding possible interference with the major operation on the controlled device when multiple control devices perform control simultaneously.

### BRIEF DESCRIPTION OF THE DRAWINGS

FIG. 1 is a flowchart of a device control method according to an embodiment of the present invention;
FIG. 2 is a flowchart of message interaction between a control device and a controlled device in a device control method according to an embodiment of the present invention;
FIG. 3 is a schematic structural diagram of a network device according to an embodiment of the present invention;
FIG. 4 is another schematic structural diagram of a network device according to an embodiment of the present invention; and
FIG. 5 is another schematic structural diagram of a network device according to an embodiment of the present invention.

### DETAILED DESCRIPTION OF THE EMBODIMENTS

In order to make persons skilled in the art understand the solutions of the embodiments of the present invention more clearly, the embodiments of the present invention are described in further detail in the following with reference to the accompanying drawings and implementation manners.

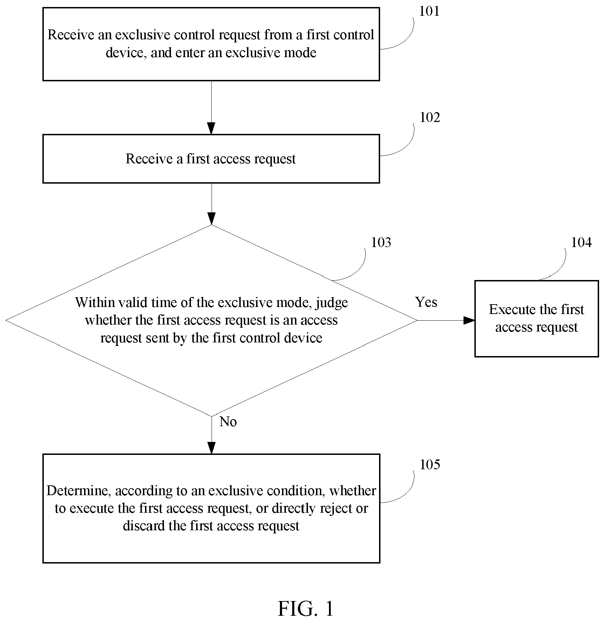

FIG. 1 is a flowchart of a device control method according to an embodiment of the present invention. The method includes the following steps:
Step 101: Receive an exclusive control request from a first control device, and enter an exclusive mode.

For example, before performing a continuous and/or key operation on a controlled device, the first control device may send an exclusive control request to the controlled device, so as to enable the controlled device to enter an exclusive mode.

After receiving the exclusive control request from the first control device, the controlled device enters the exclusive mode. Preferably, the controlled device may return a response message that corresponds to the exclusive control request to the first control device, so as to inform the first control device that the exclusive mode has already been enabled.

If multiple control devices send an exclusive control request to the controlled device, the controlled device may enter, by using a first-come-first-served policy, an exclusive mode that corresponds to a corresponding control device.

Step 102: Receive a first access request.

Step 103: Within valid time of the exclusive mode, judge whether the first access request is an access request sent by the first control device; if yes, execute step 104; and otherwise, execute step 105.

Specifically, after the exclusive control request from the first control device is received, its corresponding first control device may be determined according to address information of the request. In this case, information such as its device ID, IP address, MAC address, certificate, and certificate hash value may be recorded. Whether the first access request is an access request sent by the first control device may be determined according to recorded device information.

Step 104: Execute the first access request.

Step 105: Determine, according to an exclusive condition, whether to execute the first access request, or directly reject or discard the first access request.

That is, if the exclusive mode is directed to the first control device, within the valid time of the exclusive mode, the first control device as a monopolist has an access right to access the controlled device. However, for an access request from another control device, there are multiple different processing manners according to the exclusive condition.

In this embodiment of the present invention, the exclusive condition may be a preset exclusive condition that corresponds to the first control device. For example, only an exclusive control request initiator is allowed to access the controlled device within a certain period of time (for example, 60s) and/or within the certain number of times of invoking a command (for example, five times). That is, for exclusive control requests initiated by different control devices, exclusive conditions for starting the exclusive mode may be the same.

In addition, to further facilitate a flexible application of a user, when sending an exclusive control request, a control device may further carry exclusion condition information in the exclusive control request. After receiving the exclusive control request, a controlled device may set, according to the exclusion condition information in the exclusive control request, an exclusive condition that corresponds to the exclusive mode. Or, the control device may firstly set an exclusive condition through one or multiple exclusive control commands, and then send to the controlled device an exclusive control command that is used to start the exclusive mode and instruct the controlled device to start and apply an exclusive mode that corresponds to the preset exclusive condition. In this way, different exclusive conditions may be set for different control devices, so that differentiated services may be provided for different control devices.

In this embodiment of the present invention, the controlled device may determine, according to multiple different manners, whether the exclusive mode is within the valid time. For example:
(1) The valid time of the exclusive mode is determined according to a preset relationship between the first control device and exclusive valid time; or
   exclusive time information is carried in the control request, and the valid time is determined according to the exclusive time information.
(2) The number of continuous exclusive access requests of the first control device is determined according to a preset relationship between the first control device and information of the number of continuous access requests; and if the recorded number of access requests of the first control device in the exclusive mode is smaller than the number of continuous exclusive access requests, the exclusive mode is within the valid time; or
   threshold information of the number of requests is carried in the control request, and a threshold of the number of exclusive access requests of the first control device is determined according to the threshold information of the number of requests; and if the recorded number of access requests of the first control device in the exclusive mode is smaller than the threshold of the number of exclusive access requests, the exclusive mode is within the valid time.
(3) First time is determined according to a preset relationship between the first control device and exclusive valid time, and the number of continuous exclusive access requests of the first control device is determined according to a preset relationship between the first control device and information of the number of continuous access requests; and if current time is within the first time and the recorded number of access requests of the first control device in the exclusive mode is smaller than the number of continuous exclusive access requests, the exclusive mode is within the valid time; or
   exclusive time information and threshold information of the number of requests are carried in the control request, and second time is determined according to the exclusive time information; a threshold of the number of exclusive access requests of the first control device is determined according to the threshold information of the number of requests; and if current time is within the second time and the recorded number of access requests of the first control device in the exclusive mode is smaller than the threshold of the number of exclusive access requests, the exclusive mode is within the valid time.

It should be noted that in this embodiment of the present invention, after exclusive valid time expires, a corresponding exclusive mode may be invalid automatically. In addition, the exclusive mode may also be cancelled in advance by an exclusive control device or another control device. In this case, the method in this embodiment of the present invention may further include the following steps:
receiving an exclusive mode cancellation request; and if the exclusive mode cancellation request is a request sent by the first control device or a request sent by a control device whose level is higher than a level of the first control device, canceling the exclusive mode.

In addition, the exclusive mode may also be invalid automatically after the controlled device is restarted.

In this embodiment of the present invention, the method may further include the following steps: within the valid time of the exclusive mode, if the first access request is an access request sent by the first control device, updating a valid period of the exclusive mode (for example, an original valid period is set to 60s, and the exclusive control device may update the valid period to 80s through an exclusive control command; and in this case, the controlled device restarts timing); or in the exclusive valid time, any other access request sent by the control device may cause that the exclusive condition is updated automatically (for example, an original valid period is set to 60s, and another access request sent by the exclusive control device causes the controlled device to restart timing from 60s). In this way, an operation performed by the exclusive control device on the controlled device may be fully ensured.

Definitely, this embodiment of the present invention is not limited to these foregoing manners, and other manners may also be used to cancel the exclusive mode or update an exclusive valid period.

After the exclusive mode is invalid or is canceled, the controlled device may accept access requests of all control devices.

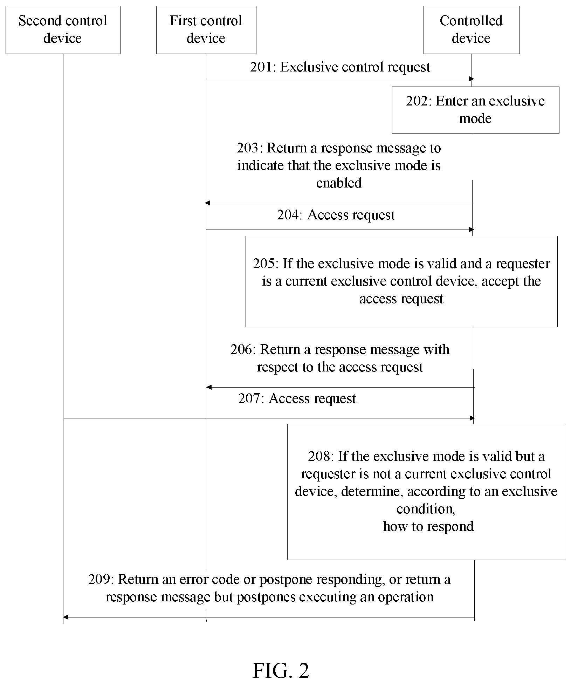

FIG. 2 is a flowchart of message interaction between a control device and a controlled device in a device control method according to an embodiment of the present invention.

201: A first control device sends an exclusive control request to a controlled device.

202: After receiving the exclusive control request, the controlled device enters an exclusive mode.

203: The controlled device returns a response message to the first control device to indicate that the exclusive mode is enabled.

204: The first control device sends an access request to the controlled device.

205: After receiving the access request, if the controlled device determines that the exclusive mode is valid and a requester is a current exclusive control device, the controlled device accepts the access request.

206: The controlled device returns to the first control device a response message with respect to the access request.

207: A second control device sends an access request to the controlled device.

208: After receiving the access request, the controlled device determines that a requester is the second control device and determines, according to an exclusive condition, how to respond.

209: The controlled device returns an error code to reject the access request or postpone responding, or returns a response message but postpones executing an operation. Definitely, the controlled device may also discard the access request directly.

It can be seen that, with the device control method in this embodiment of the present invention, a controlled device determines, according to an exclusive control request from a control device, which control device may temporarily monopolize the controlled device; within valid time of an exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are guaranteed, thereby avoiding possible interference with the major operation on the controlled device when multiple control devices perform control simultaneously.

To further enhance flexibility of an application, in this embodiment of the present invention, an access level may be set for each control device, and a control policy corresponding to each access level is set. These operations may be completed by a control center in a network or by any one control device or the controlled device, which is not limited in this embodiment of the present invention, but such information needs to be obtained by the controlled device.

In this way, before the controlled device starts an exclusive mode, that is, before step 202, the controlled device determines whether an access level of the first control device has an exclusive right; if yes, the controlled device enters the exclusive mode; and otherwise, the controlled device may not start the exclusive mode, that is, forbids the first control device to monopolize the controlled device. In addition, within the valid time of the exclusive mode, the controlled device may also cancel the exclusive mode according to a control policy that corresponds to each access level.

In addition, in this embodiment of the present invention, exclusion condition information may include exclusive access interface information, where exclusive access interfaces refer to some access interfaces affected by the exclusive mode on the controlled device. When the exclusive mode is started, for example, such access interfaces as a rebooting interface generally interrupt a continuous operation performed on the controlled device. Therefore, a non-exclusive device is forbidden to access this type of interfaces after the controlled device enters the exclusive mode; and in another example, such as interfaces for obtaining device information/status generally do not affect the controlled device in executing an operation command continuously, and thus are not affected by the exclusive mode. That is, even within exclusive valid time, any other control device may also access such interfaces normally.

The exclusive access interface information may be used to indicate an interface that is allowed to be accessed, and may also be used to indicate an interface that is forbidden to be accessed. In this way, before the controlled device executes the first access request, an interface requested to be accessed by the first access request is determined; if the interface requested to be accessed by the first access request is included in the exclusive access interface information, the first access request is executed; and otherwise, the first access request is rejected; or if the interface requested to be accessed by the first access request is included in the exclusive access interface information, the first access request is rejected; and otherwise, the first access request is executed. In this way, security of the controlled device may be better ensured. Definitely, after the exclusive mode is invalid or is cancelled, the controlled device may accept access of another control device. In this case, which interfaces are restricted to being accessed may be determined according to a preset set of accessible interfaces that correspond to control devices.

In another embodiment of the present invention, the exclusion condition information may further include an information set or a specified level of a control device. In this way, the determining, according to the exclusive condition, whether to execute the first access request may be: if the first access request is an access request sent by a second control device and the second control device is included in the information set or a level of the second control device is the specified level, executing the first access request.

In another embodiment of the present invention, the determining, according to the exclusive condition, whether to execute the first access request may be: if the first access request is an access request sent by a second control device and a level of the second control device is higher than a level of the first control device, executing the first access request.

In another embodiment of the present invention, the determining, according to the exclusive condition, whether to execute the first access request may be: rejecting an access request from another control device; or postponing executing the access request from the another control device; or discarding the access request from the another control device.

Definitely, this embodiment of the present invention is not limited to the foregoing manners, and multiple variations may be available according to this idea, which are described in the following by using examples.

It is assumed that an access level is set for each control device, and levels are Public->Basic->Admin in ascending order. Each level corresponds to a set of accessible interfaces. A control device with a Public level is untrustful for the controlled device, and therefore, only an interface that slightly affects the controlled device may be accessed, for example, an interface for obtaining a current status of a device GetStatus(); a control device with a Basic level may access more interfaces, for example, an interface for rebooting a device Reboot(); and a control device with an Admin level may access all interfaces.

Therefore, the following one or multiple policies may be set to protect a device.
(1) An interface for enabling/disabling an exclusive mode can be invoked by only a control device with a Basic/Admin (or only an Admin) level, which means that an untrustful control device with a Public level cannot request the controlled device to start the exclusive mode, thereby preventing the controlled device from being monopolized by an illegal control device.
(2) An exclusive mode that is requested to be started by a control device with a Basic level may be stopped by a control device with an Admin level, or a control device with an Admin level may control a monopolized controlled device normally no matter whether the exclusive mode is enabled.
(3) An exclusive mode that is requested to be started by a control device with an Admin level cannot be stopped by a control device with a Basic level, and can be stopped by only the control device with the Admin level or be cancelled automatically when an exclusive condition is no longer satisfied.

With the device control method in this embodiment of the present invention, reliability and efficiency of a continuous operation and a major operation that are performed by an exclusive control device on a controlled device may be ensured, thereby avoiding possible interference with the major operation on the controlled device when multiple control devices perform control simultaneously; and in addition, security of each interface of the controlled device may be further ensured.

It should be noted that in this embodiment of the present invention, the exclusive control request that is sent by the control device to the controlled device may be implemented in multiple manners, which are described in detail in the following by using examples.

### 1. The exclusive control request is implemented through a control command

For example, an exclusive mode command SetMonopolizationMode() may be set. Parameters of this command are shown in Table 1 in the following.

**Table 1**

| **Argument** | **Direction** | **relatedStateVariable** |
|---|---|---|
| Enable | IN | MonopolizationEnable |
| Mode | IN | MonopolizationMode |
| Policy | IN | MonopolizationPolicy |

Each parameter in Table 1 is defined as follows:
(1) Enable parameter (Boolean): When a value of this parameter is 1, the controlled device is instructed to enable an exclusive mode; and when the value of this parameter is 0, the controlled device is instructed to stop the exclusive mode. This parameter is not mandatory, that is, a control command for stopping the exclusive mode may be defined additionally, for example, StopMonopolization().
(2) Mode parameter (String): This parameter is used to set an exclusive condition. Optional values include Duration (duration), Times (times), and Hybrid (hybrid). Specific examples of these values are as follows:
   Duration=30s, indicating that the controlled device are required to be monopolized within 30 seconds.
   Times=6, indicating that the controlled device are required to be monopolized within six subsequent access requests.
   Hybrid=30s, 6, indicating that exclusive of the controlled device is automatically canceled only when both the duration and the times are satisfied or that exclusive of the controlled device is automatically canceled after one of the duration and the times is satisfied.
(3) Policy parameter (String): This parameter is used to set an exclusive policy and is an optional parameter. Specific examples of values of this parameter are as follows:
   MonopolizedInterfaces=Reboot FactoryReset FirmwareUpgrade, indicating that listed interfaces are forbidden to be accessed by a non-exclusive control device in an exclusive period, and while other interfaces may be normally accessed by an exclusive control device and the non- exclusive control device.
   FreeInterfaces=GetStatus GetValues, indicating that listed interfaces may be normally accessed by an exclusive control device and a non-exclusive control device in an exclusive period, and while other interfaces cannot be accessed by a non-exclusive control device.

In addition, a state variable corresponding to the foregoing one or multiple parameters may be set that an event is generated in the case of a change, for example:
When a value of MonopolizationEnable is changed from 0 to 1 due to a control command that is sent by the control device to the controlled device, the controlled device may send a unicast event to a control device that subscribes to an event, where the unicast event carries a latest value of a changed state variable, so that another control device may obtain the message; or the controlled device sends a multicast event to a specified multicast address, where the multicast event carries a latest value of a changed state variable. In this way, any control device may obtain the message by listening in a multicast port, and then decides whether to send a control command to the controlled device.

### 2. The exclusive control request is implemented through a data model

Several nodes and parameters may be defined through a data model of a device, so as to reflect a functional component, information, and a configuration state of the device in a tree structure. For example, the following data model segments reflect the information of the device, including a device name, a software version, and provider information, and so on:
Device/DeviceInfo/
FriendlyName
ProvisioningCode
SoftwareVersion
SoftwareDescription

In this embodiment of the present invention, a corresponding parameter in the data model may be set through a universal interface for setting a data model, so as to request the controlled device to start or cancel an exclusive mode.

For example, a node is defined in the data model of the device, and is used to describe information of the exclusive mode, for example:
Devcie/Monopolization/
Enable
Mode
Policy

For values of Enable, Mode, and Policy parameters, reference may be made to the foregoing description.

The control device may set these parameter values through a universal interface for setting a data model, for example, SetValues(), so as to start or cancel the exclusive mode, and may further set information such as an exclusive condition.

In addition, the control device may further query, through a universal interface for reading a data model, for example, GetValues(), whether a current controlled device is in an exclusive mode.

Definitely, the foregoing descriptions are only examples of specific implementation manners of the exclusive control request that is sent by the control device to the controlled device. The embodiments of the present invention are not limited to the foregoing two manners, and other similar implementation manners may also be available, for example, a combination of the two, that is, the control device sets an exclusive condition by operating a data model of the controlled device, and then instructs, through an exclusive mode, the controlled device to start an exclusive model that uses the foregoing exclusive condition, which are not exemplified one by one.

Persons of ordinary skill in the art may understand that all or a part of the steps in the method according to the foregoing embodiments may be implemented by a program instructing relevant hardware. The program may be stored in a computer readable storage medium, such as a ROM/RAM, a magnetic disk, and an optical disk.

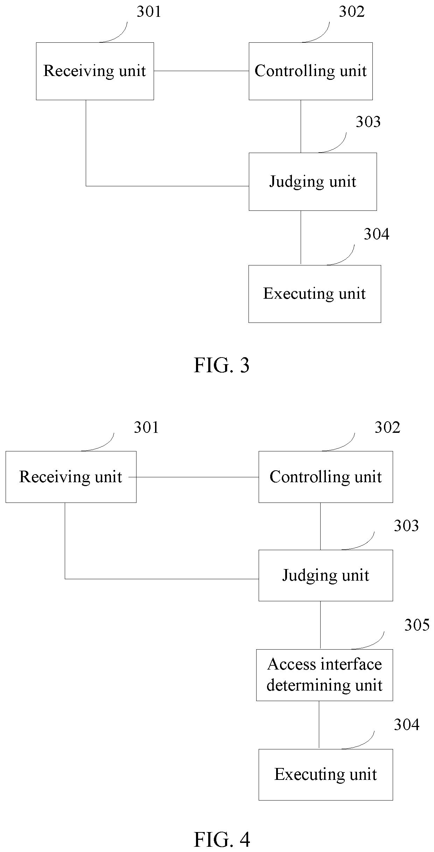

Accordingly, an embodiment of the present invention further provides a network device. FIG. 3 is a schematic structural diagram of the network device.

In this embodiment, the network device includes a receiving unit 301, a controlling unit 302, and a judging unit 303 and an executing unit 304, where:
the receiving unit 301 is configured to receive an exclusive control request and an access request;
the controlling unit 302 is configured to: after the receiving unit 301 receives an exclusive control request from a first control device, control the network device to enter an exclusive mode;
a judging unit 303 is configured to: within valid time of the exclusive mode, after the receiving unit 301 receives a first access request, judge whether the first access request is an access request sent by the first control device; and
an executing unit 304 is configured to: when a judgment result of the judging unit 303 is that the first access request is an access request sent by the first control device, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device, for example, the exclusive condition is stored in the network device.

In addition, the receiving unit is further configured to receive a request that carries exclusion condition information, for example, the control device may carry exclusion condition information in the exclusive control request, or the control device may also set an exclusive condition through one or multiple exclusive control commands. In this way, different exclusive conditions may be set for different control devices, so that differentiated services may be provided for different control devices. Therefore, the network device may further include: an exclusive condition determining unit (which is not shown in the figure), configured to determine the exclusive condition according to the exclusion condition information.

In this embodiment of the present invention, multiple different manners may be used to determine whether the exclusive mode is within the valid time. For example:

In a network device embodiment of the present invention, the network device further includes a first time determining unit or a second time determining unit, where:
the first time determining unit is configured to determine the valid time of the exclusive mode according to a preset relationship between the first control device and exclusive valid time; or
the second time determining unit is configured to determine the valid time according to exclusive time information carried in the control request.

In a network device embodiment of the present invention, the network device further includes a third time determining unit or a fourth time determining unit, where:
the third time determining unit is configured to: determine the number of continuous exclusive access requests of the first control device according to a preset relationship between the first control device and information of the number of continuous access requests; and if the recorded number of access requests of the first control device in the exclusive mode is smaller than the number of continuous exclusive access requests, determine that the exclusive mode is within the valid time; or
the fourth time determining unit is configured to: determine a threshold of the number of exclusive access requests of the first control device according to threshold information of the number of requests, where the threshold information of the number of requests is carried in the control request; and if the recorded number of access requests of the first control device in the exclusive mode is smaller than the threshold of the number of exclusive access requests, determine that the exclusive mode is within the valid time.

In a network device embodiment of the present invention, the network device further includes a fifth time determining unit or a sixth time determining unit, where:
the fifth time determining unit is configured to: determine first time according to a preset relationship between the first control device and exclusive valid time, and determine the number of continuous exclusive access requests of the first control device according to a preset relationship between the first control device and information of the number of continuous access requests; and if current time is within the first time and the recorded number of access requests of the first control device in the exclusive mode is smaller than the number of continuous exclusive access requests, determine that the exclusive mode is within the valid time; or
the sixth time determining unit is configured to: determine second time according to exclusive time information that is carried in the control request; determine a threshold of the number of exclusive access requests of the first control device according to threshold information of the number of requests, where the threshold information of the number of requests is carried in the control request; and if current time is within the second time and the recorded number of access requests of the first control device in the exclusive mode is smaller than the threshold of the number of exclusive access requests, determine that the exclusive mode is within the valid time.

With the network device in this embodiment of the present invention, which control device may temporarily monopolize the network device is determined according to an exclusive control request of a control device; within valid time of an exclusive mode, an access request of an exclusive control device is normally executed, but whether to execute an access request from another control device is determined according to an exclusive condition, or the access request from the another control device is directly rejected or discarded. In this way, reliability and efficiency of a continuous operation and a major operation that are performed by the exclusive control device on the network device are ensured, thereby avoiding possible interference with the major operation on the network device when multiple control devices perform control simultaneously.

In another network device embodiment of the present invention, the network device may further include an updating unit (which is not shown in the figure), configured to: within the valid time of the exclusive mode, if the first access request is an access request sent by the first control device, update a valid period of the exclusive mode. In this way, an operation that is performed by an exclusive control device on the network device may be fully ensured.

FIG. 4 is another schematic structural diagram of a network device according to an embodiment of the present invention.

This embodiment is different from the embodiment shown in FIG. 3 in that in this embodiment, the exclusion condition information includes exclusive access interface information and the network device further includes:
an access interface determining unit 305, configured to: determine an interface that is requested to be accessed by the first access request, and notify the executing unit 304 of a determining result.

Accordingly, the executing unit 304 includes an exclusive executing subunit and a condition executing subunit, where:
the exclusive executing subunit is configured to: when a judgment result of the judging unit 303 is that the first access request is an access request sent by the first control device, execute the first access request; and
the condition executing subunit is configured to: when the judgment result of the judging unit 303 is that the first access request is not an access request sent by the first control device and the determining result of the access interface determining unit 305 is that the interface that is requested to be accessed by the first access request is included in the exclusive access interface information, execute the first access request; and otherwise, reject the first access request; or when the judgment result of the judging unit 303 is that the first access request is not an access request sent by the first control device and the determining result of the access interface determining unit 305 is that the interface that is requested to be accessed by the first access request is included in the exclusive access interface information, reject the first access request; and otherwise, execute the first access request.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, security of each interface of the network device may further be ensured.

Optionally, in the embodiments shown in FIG. 3 and FIG. 4, the exclusion condition information may further include an information set or a specified level of a control device. Accordingly, when determining, according to an exclusive condition, whether to execute the first access request, the executing unit 304 executes the first access request if the first access request is an access request sent by a second control device and the second control device is included in the information set or a level of the second control device is the specified level.

Optionally, in the embodiments shown in FIG. 3 and FIG. 4, when determining, according to an exclusive condition, whether to execute the first access request, the executing unit 304 may also perform execution according to the following manner: If the first access request is an access request sent by a second control device and a level of the second control device is higher than a level of the first control device, execute the first access request.

Optionally, in the embodiments shown in FIG. 3 and FIG. 4, when determining, according to an exclusive condition, whether to execute the first access request, the executing unit 304 may reject an access request from another control device, or postpone executing the access request from the another control device, or discard the access request from the another control device.

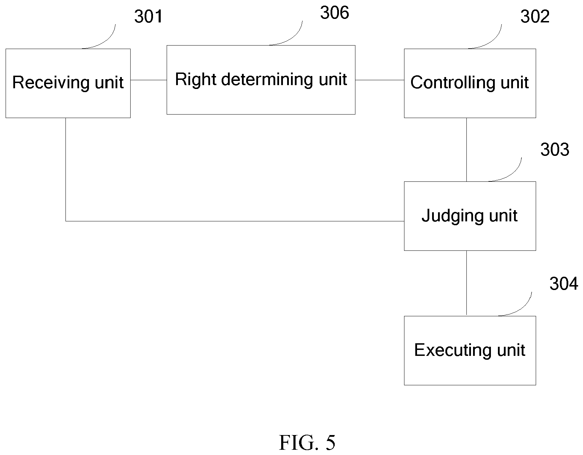

FIG. 5 is another schematic structural diagram of a network device according to an embodiment of the present invention.

This embodiment is different from the embodiment shown in FIG. 3 in that in this embodiment, each control device corresponds to one access level. Accordingly, the network device may further include:
a right determining unit 306, configured to: before the controlling unit 302 controls the network device to enter an exclusive mode, determine, according to an access level of the first control device, whether the access level of the first control device has an exclusive right, and if yes, instruct the controlling unit 302 to control the network device to enter the exclusive mode.

It should be noted that the right determining unit 306 may also be applied in the embodiment shown in FIG. 4.

In the foregoing embodiments, the receiving unit 302 may further be configured to receive an exclusive mode cancellation request.

Accordingly, the judging unit 303 is further configured to: within the valid time of the exclusive mode, judge whether the exclusive mode cancellation request is a request sent by the first control device or a request sent by a control device whose level is higher than a level of the first control device. The executing unit 304 is further configured to: after the judging unit 303 judges that the exclusive mode cancellation request is a request sent by the first control device or a request sent by a control device whose level is higher than a level of the first control device, cancel the exclusive mode.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, whether an access level of a first control device has an exclusive right is determined, which further ensures security of the network device.

Accordingly, an embodiment of the present invention further provides a network system. The system includes a controlled device and a first control device, where:
the first control device is configured to send an exclusive control request and an access request to the controlled device; and
the controlled device is configured to: receive the exclusive control request from the first control device and enter an exclusive mode; receive a first access request, and within valid time of the exclusive mode, judge whether the first access request is an access request sent by the first control device; if yes, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device.

In another embodiment of the present invention, the exclusive condition is sent by the first control device to the controlled device, for example, exclusion condition information is carried in the sent exclusive control request, or an exclusive condition may also be set through one or multiple exclusive control commands first. In this way, different exclusive conditions may be set for different control devices, so that differentiated services may be provided for different control devices.

Accordingly, the controlled device is further configured to: receive exclusion condition information and determine the exclusive condition according to the exclusion condition information.

With the network system in this embodiment of the present invention, reliability and efficiency of a continuous operation and a major operation that are performed by an exclusive first control device on a controlled device may be ensured, thereby avoiding possible interference with the major operation on the controlled device when multiple control devices perform control simultaneously.

## Claims

1. A device control method, comprising:
receiving (101) a request for exclusive control from a first control device, and entering an exclusive mode;
receiving (102) a first access request; and
within valid time of the exclusive mode, judging (103) whether the first access request is an access request sent by the first control device;
**characterized by** the method comprising:
if the first access request is an access request sent by the first control device, executing (104) the first access request; and if the first access request is not an access request sent by the first control device, determining (105), according to an exclusive condition, whether to execute the first access request; and
executing the first access request if the first access request is not an access request sent by the first control device and the exclusion condition is satisfied;
wherein within valid time of the exclusive mode is determined by: if the recorded number of access request from the first control device in the exclusive mode is smaller than a number of continuous exclusive access requests, the exclusive mode is within the valid time, the number of continuous exclusive access requests being determined according to a preset relationship between the first control device and information of the number of continuous access requests.

2. The method according to claim 1, wherein each control device corresponds to one access level; and the method further comprises:
before entering the exclusive mode, determining, according to an access level of the first control device, whether the access level of the first control device has an exclusive right; and if the access level of the first control device has an exclusive right, entering the exclusive mode.

3. The method according to claim 1, wherein the method further comprises:
receiving an exclusive mode cancellation request; and
if the exclusive mode cancellation request is a request sent by the first control device, canceling the exclusive mode.

4. The method according to claim 1, wherein the method further comprises:
receiving an exclusive mode cancellation request; and
if the exclusive mode cancellation request is a request sent by a control device whose access level is higher than an access level of the first control device, canceling the exclusive mode.

5. The method according to claim 1, wherein the method further comprises:
receiving information of the exclusion condition in the request for exclusive control sent by the first control device; and determining the exclusive condition according to the information of exclusive condition.

6. The method according to claim 5, wherein the information of the exclusive condition comprises exclusive access interface information, and the determining, according to the exclusive condition, whether to execute the first access request further comprises:
determining an interface that is requested to be accessed by the first access request; and
if the interface that is requested to be accessed by the first access request is comprised in the exclusive access interface information, executing the first access request; and otherwise, rejecting the first access request; or
if the interface that is requested to be accessed by the first access request is comprised in the exclusive access interface information, rejecting the first access request; and otherwise, executing the first access request.

7. The method according to claim 5, wherein the information of the exclusive condition comprises an information set or a specified access level of a control device, and the determining, according to the exclusive condition, whether to execute the first access request further comprises:
if the first access request is an access request sent by a second control device and the second control device is comprised in the information set, or an access level of the second control device is the specified access level, executing the first access request.

8. A network device, comprising:
a receiving unit (301), configured to receive a request for exclusive control and an access request;
a controlling unit (302), configured to: after the receiving unit receives a request for exclusive control from a first control device, control the network device to enter an exclusive mode;
a judging unit (303), configured to: within valid time of the exclusive mode, after the receiving unit receives a first access request, judge whether the first access request is an access request sent by the first control device; and
**characterized by** the device comprising:
an executing unit (304), configured to: when a judgment result of the judging unit is that the first access request is an access request sent by the first control device, execute the first access request; and when a judgment result of the judging unit is that the first access request is not an access request sent by the first control device ermine, according to an exclusive condition, whether to execute the first access request, and executing the first access request if the first access request is not an access request sent by the first control device and the exclusion condition is satisfied;
wherein the network device further comprises:
a time determining unit, configured to: determine that the exclusive mode is within the valid time if the recorded number of access request from the first control device in the exclusive mode is smaller than a number of continuous exclusive access requests, the number of continuous exclusive access requests being determined according to a preset relationship between the first control device and information of the number of continuous access requests.

9. The network device according to claim 8, wherein the network device further comprises:
a right determining unit, configured to: before the controlling unit controls the network device to enter an exclusive mode, determine, according to an access level of the first control device, whether the access level of the first control device has an exclusive right; and if the access level of the first control device has an exclusive right, instruct the controlling unit to control the network device to enter the exclusive mode.

10. The network device according to claim 8, wherein:
the receiving unit is further configured to receive an exclusive mode cancellation request;
the judging unit is further configured to: within the valid time of the exclusive mode, judge whether the exclusive mode cancellation request is a request sent by the first control device; and
the executing unit is further configured to: after the judging unit judges that the exclusive mode cancellation request is a request sent by the first control device, cancel the exclusive mode.

11. The network device according to claim 8, wherein:
the receiving unit is further configured to receive an exclusive mode cancellation request;
the judging unit is further configured to: within the valid time of the exclusive mode,
judge whether the exclusive mode cancellation request is a request sent by a control device whose access level is higher than an access level of the first control device; and
the executing unit is further configured to: after the judging unit judges that the exclusive mode cancellation request is a request sent by a control device whose access level is higher than an access level of the first control device, cancel the exclusive mode.

12. The network device according to claim 8, wherein:
the receiving unit is further configured to receive information of the exclusion condition in the request for exclusive control sent by the first control device; and the network device further comprises:
an exclusive condition determining unit, configured to determine the exclusive condition according to the information of exclusive condition.

13. The network device according to claim 12, wherein the information of the exclusive condition comprises exclusive access interface information, and the network device further comprises:
an access interface determining unit, configured to: determine an interface that is requested to be accessed by the first access request, and notify the executing unit of a determining result; and
the executing unit comprises:
an exclusive executing subunit, configured to: when a judgment result of the judging unit is that the first access request is an access request sent by the first control device, execute the first access request; and
a condition executing subunit, configured to: when the judgment result of the judging unit is that the first access request is not an access request sent by the first control device and the determining result of the access interface determining unit is that the interface that is requested to be accessed by the first access request is comprised in the exclusive access interface information, execute the first access request; and otherwise, reject the first access request; or when the judgment result of the judging unit is that the first access request is not an access request sent by the first control device and the determining result of the access interface determining unit is that the interface that is requested to be accessed by the first access request is comprised in the exclusive access interface information, reject the first access request; and otherwise, execute the first access request.

14. The network device according to claim 12, wherein the information of the exclusive condition comprises an information set or a specified access level of a control device, and the executing unit is further configured to executes the first access request if the first access request is an access request sent by a second control device and the second control device is comprised in the information set or an access level of the second control device is the specified access level.

15. A network system, comprising a controlled device and a first control device;
wherein the first control device is configured to send a request for exclusive control and an access request to the controlled device;
**characterized in that** the controlled device is configured to: receive the request for exclusive control from the first control device and enter an exclusive mode; receive a first access request, and within valid time of the exclusive mode, judge whether the first access request is an access request sent by the first control device; and if the first access request is an access request sent by the first control device, execute the first access request; and if the first access request is not an access request sent by the first control device determine, according to an exclusive condition, whether to execute the first access request; and executing the first access request if the first access request is not an access request sent by the first control device and the exclusion condition is satisfied;
wherein the controlled device is further configured to determine the exclusive mode is within the valid time if the recorded number of access request from the first control device in the exclusive mode is smaller than a number of continuous exclusive access requests, the number of continuous exclusive access requests being determined according to a preset relationship between the first control device and information of the number of continuous access requests.

## Patentansprüche

1. Vorrichtungssteuerverfahren, umfassend:
Empfangen (101) einer Anforderung zur Exklusivsteuerung von einer ersten Steuervorrichtung und Eintreten in einen Exklusivmodus;
Empfangen (102) einer ersten Zugangsanforderung und,
innerhalb einer gültigen Zeit des Exklusivmodus, Beurteilen (103), ob die erste Zugangsanforderung eine Zugangsanforderung ist, die durch die erste Steuervorrichtung gesendet wird;
**dadurch gekennzeichnet, dass** das Verfahren Folgendes umfasst:
falls die erste Zugangsanforderung eine Zugangsanforderung ist, die durch die erste Steuervorrichtung gesendet wird, Ausführen (104) der ersten Zugangsanforderung und, falls die erste Zugangsanforderung keine Zugangsanforderung ist, die durch die erste Steuervorrichtung gesendet wird, Bestimmen (105), gemäß einer Exklusivbedingung, ob die erste Zugangsanforderung ausgeführt werden soll; und
Ausführen der ersten Zugangsanforderung, falls die erste Zugangsanforderung keine Zugangsanforderung ist, die durch die erste Steuervorrichtung gesendet wird, und die Exklusivbedingung erfüllt ist;
wobei innerhalb der gültigen Zeit des Exklusivmodus durch Folgendes bestimmt wird:
falls die aufgezeichnete Anzahl von Zugangsanforderungen von der ersten Steuervorrichtung im Exklusivmodus kleiner als eine Anzahl von kontinuierlichen Exklusivzugangsanforderungen ist, befindet sich der Exklusivmodus innerhalb der gültigen Zeit, wobei die Anzahl von kontinuierlichen Exklusivzugangsanforderungen gemäß einer voreingestellten Beziehung zwischen der ersten Steuervorrichtung und Informationen der Anzahl von kontinuierlichen Zugangsanforderungen bestimmt wird.

2. Verfahren nach Anspruch 1, wobei jede Steuervorrichtung einem Zugangsniveau entspricht und das Verfahren ferner Folgendes umfasst:
vor dem Eintreten in den Exklusivmodus, Bestimmen gemäß einem Zugangsniveau der ersten Steuervorrichtung, ob das Zugangsniveau der ersten Steuervorrichtung ein Exklusivrecht besitzt; und, falls das Zugangsniveau der ersten Steuervorrichtung ein Exklusivrecht besitzt, Eintreten in den Exklusivmodus.

3. Verfahren nach Anspruch 1, wobei das Verfahren ferner Folgendes umfasst:
Empfangen einer Exklusivmodus-Abbruchsanforderung und,
falls die Exklusivmodus-Abbruchsanforderung eine Anforderung ist, die durch die erste Steuervorrichtung gesendet wird, Abbrechen des Exklusivmodus.

4. Verfahren nach Anspruch 1, wobei das Verfahren ferner Folgendes umfasst:
Empfangen einer Exklusivmodus-Abbruchsanforderung und,
falls die Exklusivmodus-Abbruchsanforderung eine Anforderung ist, die durch eine Steuervorrichtung gesendet wird, deren Zugangsniveau höher als ein Zugangsniveau der ersten Steuervorrichtung ist, Abbrechen des Exklusivmodus.

5. Verfahren nach Anspruch 1, wobei das Verfahren ferner Folgendes umfasst:
Empfangen von Informationen der Exklusivbedingung in der Anforderung zur Exklusivsteuerung, die durch die erste Steuervorrichtung gesendet wird; und Bestimmen der Exklusivbedingung gemäß den Informationen der Exklusivbedingung.

6. Verfahren nach Anspruch 5, wobei die Informationen der Exklusivbedingung Exklusivzugang-Schnittstelleninformationen umfassen und das Bestimmen, gemäß der Exklusivbedingung, ob die erste Zugangsanforderung ausgeführt werden soll, ferner Folgendes umfasst:
Bestimmen einer Schnittstelle, für die durch die erste Zugangsanforderung ein Zugriff angefordert wird; und,
falls die Schnittstelle, für die durch die erste Zugangsanforderung ein Zugriff angefordert wird, in den Exklusivzugang-Schnittstelleninformationen enthalten ist, Ausführen der ersten Zugangsanforderung und andernfalls Zurückweisen der ersten Zugangsanforderung oder,
falls die Schnittstelle, für die durch die erste Zugangsanforderung ein Zugang angefordert wird, in den Exklusivzugang-Schnittstelleninformationen enthalten ist, Zurückweisen der ersten Zugangsanforderung und andernfalls Ausführen der ersten Zugangsanforderung.

7. Verfahren nach Anspruch 5, wobei die Informationen der Exklusivbedingung eine Informationsmenge oder ein spezifiziertes Zugangsniveau einer Steuervorrichtung umfassen und das Bestimmen, gemäß der Exklusivbedingung, ob die erste Zugangsanforderung ausgeführt werden soll, ferner Folgendes umfasst:
falls die erste Zugangsanforderung eine Zugangsanforderung ist, die durch eine zweite Steuervorrichtung gesendet wird, und die zweite Steuervorrichtung in der Informationsmenge enthalten ist oder ein Zugangsniveau der zweiten Steuervorrichtung das spezifizierte Zugangsniveau ist, Ausführen der ersten Zugangsanforderung.

8. Netzwerkvorrichtung, umfassend:
eine Empfangseinheit (301), die ausgelegt ist zum Empfangen einer Anforderung zur Exklusivsteuerung und einer Zugangsanforderung;
eine Steuereinheit (302), die ausgelegt ist zum, nachdem die Empfangseinheit eine Anforderung zur Exklusivsteuerung von einer ersten Steuervorrichtung empfängt, Steuern der Netzwerkvorrichtung, in einen Exklusivmodus einzutreten;
eine Beurteilungseinheit (303), die ausgelegt ist zum, innerhalb einer gültigen Zeit des Exklusivmodus, nachdem die Empfangseinheit eine erste Zugangsanforderung empfängt, Beurteilen, ob die erste Zugangsanforderung eine Zugangsanforderung ist, die durch die erste Steuervorrichtung gesendet wird; und
**dadurch gekennzeichnet, dass** die Vorrichtung Folgendes umfasst:
eine Ausführungseinheit (304), die ausgelegt ist zum, wenn ein Beurteilungsergebnis der Beurteilungseinheit lautet, dass die erste Zugangsanforderung eine Zugangsanforderung ist, die durch die erste Steuervorrichtung gesendet wird, Ausführen der ersten Zugangsanforderung und, wenn ein Beurteilungsergebnis der Beurteilungseinheit lautet, dass die erste Zugangsanforderung keine Zugangsanforderung ist, die durch die erste Steuervorrichtung gesendet wird, Bestimmen, gemäß einer Exklusivbedingung, ob die erste Zugangsanforderung ausgeführt werden soll, und Ausführen der ersten Zugangsanforderung, falls die erste Zugangsanforderung keine Zugangsanforderung ist, die durch die erste Steuervorrichtung gesendet wird, und die Exklusivbedingung erfüllt ist;
wobei die Netzwerkvorrichtung ferner Folgendes umfasst:
eine Zeitbestimmungseinheit, die ausgelegt ist zum Bestimmen, dass sich der Exklusivmodus innerhalb der gültigen Zeit befindet, falls die aufgezeichnete Anzahl von Zugangsanforderungen von der ersten Steuervorrichtung im Exklusivmodus kleiner als eine Anzahl von kontinuierlichen Exklusivzugangsanforderungen ist,
wobei die Anzahl von kontinuierlichen Exklusivzugangsanforderungen gemäß einer voreingestellten Beziehung zwischen der ersten Steuervorrichtung und Informationen der Anzahl von kontinuierlichen Zugangsanforderungen bestimmt wird.

9. Netzwerkvorrichtung nach Anspruch 8, wobei die Netzwerkvorrichtung ferner Folgendes umfasst:
eine Rechtbestimmungseinheit, die ausgelegt ist zum, bevor die Steuereinheit die Netzwerkvorrichtung steuert, in einen Exklusivmodus einzutreten, Bestimmen, gemäß einem Zugangsniveau der ersten Steuervorrichtung, ob das Zugangsniveau der ersten Steuervorrichtung ein Exklusivrecht aufweist; und, falls das Zugangsniveau der ersten Steuervorrichtung ein Exklusivrecht aufweist, Anweisen der Steuereinheit, die Netzwerkvorrichtung zu steuern, in den Exklusivmodus einzutreten.

10. Netzwerkvorrichtung nach Anspruch 8, wobei:
die Empfangseinheit ferner ausgelegt ist zum Empfangen einer Exklusivmodus-Abbruchsanforderung ;
die Beurteilungseinheit ferner ausgelegt ist zum, innerhalb der gültigen Zeit des Exklusivmodus, Beurteilen, ob die Exklusivmodus-Abbruchsanforderung eine Anforderung ist, die durch die erste Steuervorrichtung gesendet wird; und
die Ausführungseinheit ferner ausgelegt ist zum, nachdem die Beurteilungseinheit beurteilt, dass die Exklusivmodus-Abbruchsanforderung eine Anforderung ist, die durch die erste Steuervorrichtung gesendet wird, Abbrechen des Exklusivmodus.

11. Netzwerkvorrichtung nach Anspruch 8, wobei:
die Empfangseinheit ferner ausgelegt ist zum Empfangen einer Exklusivmodus-Abbruchsanforderung ;
die Beurteilungseinheit ferner ausgelegt ist zum, innerhalb der gültigen Zeit des Exklusivmodus, Beurteilen, ob die Exklusivmodus-Abbruchsanforderung eine Anforderung ist, die durch eine Steuervorrichtung gesendet wird, deren Zugangsniveau höher als ein Zugangsniveau der ersten Steuervorrichtung ist; und
die Ausführungseinheit ferner ausgelegt ist zum, nachdem die Beurteilungseinheit beurteilt, dass die Exklusivmodus-Abbruchsanforderung eine Anforderung ist, die durch eine Steuervorrichtung gesendet wird, deren Zugangsniveau höher als ein Zugangsniveau der ersten Steuervorrichtung ist, Abbrechen des Exklusivmodus.

12. Netzwerkvorrichtung nach Anspruch 8, wobei:
die Empfangseinheit ferner ausgelegt ist zum Empfangen von Informationen der Exklusivbedingung in der Anforderung zur Exklusivsteuerung, die durch die erste Steuervorrichtung gesendet wird; und die Netzwerkvorrichtung ferner Folgendes umfasst:
eine Exklusivbedingung-Bestimmungseinheit, die ausgelegt ist zum Bestimmen der Exklusivbedingung gemäß den Informationen der Exklusivbedingung.

13. Netzwerkvorrichtung nach Anspruch 12, wobei die Informationen der Exklusivbedingung Exklusivzugang-Schnittstelleninformationen umfassen und die Netzwerkvorrichtung ferner Folgendes umfasst:
eine Zugangsschnittstellen-Bestimmungseinheit, die ausgelegt ist zum Bestimmen einer Schnittstelle, für die durch die erste Zugangsanforderung ein Zugriff angefordert wird, und zum Benachrichtigen der Ausführungseinheit über ein Bestimmungsergebnis und
die Ausführungseinheit Folgendes umfasst:
eine Exklusivausführungsuntereinheit, die ausgelegt ist zum, wenn ein Beurteilungsergebnis der Beurteilungseinheit lautet, dass die erste Zugangsanforderung eine Zugangsanforderung ist, die durch die erste Steuervorrichtung gesendet wird, Ausführen der ersten Zugangsanforderung, und
eine Bedingungsausführungsuntereinheit, die ausgelegt ist zum, wenn das Beurteilungsergebnis der Beurteilungseinheit lautet, dass die erste Zugangsanforderung keine Zugangsanforderung ist, die durch die erste Steuervorrichtung gesendet wird, und das Bestimmungsergebnis der Zugangsschnittstellen-Bestimmungseinheit lautet, dass die Schnittstelle, für die durch die erste Zugangsanforderung ein Zugriff angefordert wird, in den Exklusivzugang-Schnittstelleninformationen enthalten ist, Ausführen der ersten Zugangsanforderung und andernfalls Zurückweisen der ersten Zugangsanforderung oder ausgelegt ist zum, wenn das Beurteilungsergebnis der Beurteilungseinheit lautet, dass die erste Zugangsanforderung keine Zugangsanforderung ist, die durch erste Steuervorrichtung gesendet wird, und das Bestimmungsergebnis der Zugangsschnittstellen-Bestimmungseinheit lautet, dass die Schnittstelle, für die durch die erste Zugangsanforderung ein Zugriff angefordert wird, in den Exklusivzugang-Schnittstelleninformationen enthalten ist, Zurückweisen der ersten Zugangsanforderung und andernfalls Ausführen der ersten Zugangsanforderung.

14. Netzwerkvorrichtung nach Anspruch 12, wobei die Informationen der Exklusivbedingung eine Informationsmenge oder ein spezifiziertes Zugangsniveau einer Steuervorrichtung umfassen und die Ausführungseinheit ferner ausgelegt ist zum Ausführen der ersten Zugangsanforderung, falls die erste Zugangsanforderung eine Zugangsanforderung ist, die durch eine zweite Steuervorrichtung gesendet wird, und die zweite Steuervorrichtung in der Informationsmenge enthalten ist oder ein Zugangsniveau der zweiten Steuervorrichtung das spezifizierte Zugangsniveau ist.

15. Netzwerksystem, das eine gesteuerte Vorrichtung und eine erste Steuervorrichtung umfasst;
wobei die erste Steuervorrichtung ausgelegt ist zum Senden einer Anforderung zur Exklusivsteuerung und einer Zugangsanforderung zur gesteuerten Vorrichtung;
**dadurch gekennzeichnet, dass** die gesteuerte Vorrichtung ausgelegt ist zum Empfangen der Anforderung zur Exklusivsteuerung von der ersten Steuervorrichtung und Eintreten in einen Exklusivmodus; Empfangen einer ersten Zugangsanforderung und, innerhalb einer gültigen Zeit des Exklusivmodus, Beurteilen, ob die erste Zugangsanforderung eine Zugangsanforderung ist, die durch die erste Steuervorrichtung gesendet wird; und, falls die erste Zugangsanforderung eine Zugangsanforderung ist, die durch die erste Steuervorrichtung gesendet wird, Ausführen der ersten Zugangsanforderung und, falls die erste Zugangsanforderung keine Zugangsanforderung ist, die durch die erste Steuervorrichtung gesendet wird, Bestimmen, gemäß einer Exklusivbedingung, ob die erste Zugangsanforderung ausgeführt werden soll; und Ausführen der ersten Zugangsanforderung, falls die erste Zugangsanforderung keine Zugangsanforderung ist, die durch die erste Steuervorrichtung gesendet wird, und die Exklusionsbedingung erfüllt ist;
wobei die gesteuerte Vorrichtung ferner ausgelegt ist zum Bestimmen, dass sich der Exklusivmodus innerhalb der gültigen Zeit befindet, falls die aufgezeichnete Anzahl von Zugangsanforderungen von der ersten Steuervorrichtung im Exklusivmodus kleiner als eine Anzahl von kontinuierlichen Exklusivzugangsanforderungen ist, wobei die Anzahl von kontinuierlichen Exklusivzugangsanforderungen gemäß einer voreingestellten Beziehung zwischen der ersten Steuervorrichtung und Informationen der Anzahl von kontinuierlichen Zugangsanforderungen bestimmt wird.

## Revendications

1. Procédé de commande de dispositif, consistant à :
recevoir (101) une demande de commande d'exclusion en provenance d'un premier dispositif de commande, et entrer dans un mode d'exclusion ;
recevoir (102) une première demande d'accès ; et
dans un délai valide du mode d'exclusion, juger (103) si la première demande d'accès est ou non une demande d'accès envoyée par le premier dispositif de commande ;
le procédé étant **caractérisé par** les étapes consistant à :
si la première demande d'accès est une demande d'accès envoyée par le premier dispositif de commande, exécuter (104) la première demande d'accès; et si la première demande d'accès n'est pas une demande d'accès envoyée par le premier dispositif de commande, déterminer (105), selon une condition d'exclusion, s'il faut exécuter ou non la première demande d'accès ; et
exécuter la première demande d'accès si la première demande d'accès n'est pas une demande d'accès envoyée par le premier dispositif de commande et la condition d'exclusion est satisfaite ;
le délai valide du mode d'exclusion étant déterminé par : si le nombre enregistré de demandes d'accès en provenance du premier dispositif de commande dans le mode d'exclusion est inférieur à un nombre de demandes d'accès d'exclusion continues, le mode d'exclusion est dans le délai valide, le nombre de demandes d'accès d'exclusion continues étant déterminé selon une relation prédéfinie entre le premier dispositif de commande et une information du nombre de demandes d'accès continues.

2. Procédé selon la revendication 1, dans lequel chaque dispositif de commande correspond à un niveau d'accès ; et le procédé consistant en outre à :
avant d'entrer dans le mode d'exclusion, déterminer, selon un niveau d'accès du premier dispositif de commande, si le niveau d'accès du premier dispositif de commande a ou non un droit d'exclusion ; et
si le niveau d'accès du premier dispositif de commande a un droit d'exclusion, entrer dans le mode d'exclusion.

3. Procédé selon la revendication 1, le procédé consistant en outre à :
recevoir une demande d'annulation de mode d'exclusion ; et
si la demande d'annulation de mode d'exclusion est une demande envoyée par le premier dispositif de commande, annuler le mode d'exclusion.

4. Procédé selon la revendication 1, le procédé consistant en outre à :
recevoir une demande d'annulation de mode d'exclusion ; et
si la demande d'annulation de mode d'exclusion est une demande envoyée par un dispositif de commande dont le niveau d'accès est supérieur à un niveau d'accès du premier dispositif de commande, annuler le mode d'exclusion.

5. Procédé selon la revendication 1, le procédé consistant en outre à :
recevoir une information de la condition d'exclusion dans la demande de commande d'exclusion envoyée par le premier dispositif de commande ; et déterminer la condition d'exclusion selon l'information de condition d'exclusion.

6. Procédé selon la revendication 5, dans lequel l'information de la condition d'exclusion comprend une information d'interface d'accès d'exclusion, et la détermination, selon la condition d'exclusion, de s'il faut exécuter ou non la première demande d'accès consiste en outre à :
déterminer une interface à laquelle l'accès est demandé par la première demande d'accès ; et
si l'interface à laquelle l'accès est demandé par la première demande d'accès est comprise dans l'information d'interface d'accès d'exclusion, exécuter la première demande d'accès ; et sinon, rejeter la première demande d'accès ; ou
si l'interface à laquelle l'accès est demandé par la première demande d'accès est comprise dans l'information d'interface d'accès d'exclusion, rejeter la première demande d'accès ; et sinon, exécuter la première demande d'accès.

7. Procédé selon la revendication 5, dans lequel l'information de la condition d'exclusion comprend un ensemble d'informations ou un niveau d'accès spécifié d'un dispositif de commande, et la détermination, selon la condition d'exclusion, de s'il faut exécuter ou non la première demande d'accès consiste en outre à :
si la première demande d'accès est une demande d'accès envoyée par un second dispositif de commande et le second dispositif de commande est compris dans l'ensemble d'informations, ou un niveau d'accès du second dispositif de commande est le niveau d'accès spécifié, exécuter la première demande d'accès.

8. Dispositif de réseau, comprenant :
une unité de réception (301), configurée pour recevoir une demande de commande d'exclusion et une demande d'accès ;
une unité de commande (302), configurée pour : après que l'unité de réception a reçu une demande de commande d'exclusion en provenance d'un premier dispositif de commande, commander le dispositif de réseau pour qu'il entre dans un mode d'exclusion ;
une unité de jugement (303), configuré pour : dans un délai valide du mode d'exclusion, après que l'unité de réception a reçu une première demande d'accès, juger si la première demande d'accès est ou non une demande d'accès envoyée par le premier dispositif de commande ; et
**caractérisé en ce qu'**il comprend en outre :
une unité d'exécution (304), configurée pour : quand un résultat de jugement de l'unité de jugement indique que la première demande d'accès est une demande d'accès envoyée par le premier dispositif de commande, exécuter la première demande d'accès ; et quand un résultat de jugement de l'unité de jugement indique que la première demande d'accès n'est pas une demande d'accès envoyée par le premier dispositif de commande, déterminer, selon une condition d'exclusion, s'il faut exécuter ou non la première demande d'accès, et exécuter la première demande d'accès si la première demande d'accès n'est pas une demande d'accès envoyée par le premier dispositif de commande et la condition d'exclusion est satisfaite ;
le dispositif de réseau comprenant en outre :
une unité de détermination de délai, configurée pour : déterminer que le mode d'exclusion est dans le délai valide si le nombre enregistré de demandes d'accès en provenance du premier dispositif de commande dans le mode d'exclusion est inférieur à un nombre de demandes d'accès d'exclusion continues, le nombre de demandes d'accès d'exclusion continues étant déterminé selon une relation prédéfinie entre le premier dispositif de commande et une information du nombre de demandes d'accès continues.

9. Dispositif de réseau selon la revendication 8, le dispositif de réseau comprenant en outre :
une unité de détermination de droit, configurée pour : avant que l'unité de commande ne commande le dispositif de réseau pour qu'il entre dans un mode d'exclusion, déterminer, selon un niveau d'accès du premier dispositif de commande, si le niveau d'accès du premier dispositif de commande a un droit d'exclusion ; et si le niveau d'accès du premier dispositif de commande a un droit d'exclusion, donner l'instruction à l'unité de commande de commander le dispositif de réseau pour qu'il entre dans le mode d'exclusion.

10. Dispositif de réseau selon la revendication 8, dans lequel :
l'unité de réception est en outre configurée pour recevoir une demande d'annulation de mode d'exclusion ;
l'unité de jugement est en outre configurée pour : dans le délai valide du mode d'exclusion, juger si la demande d'annulation de mode d'exclusion est ou non une demande envoyée par le premier dispositif de commande ; et
l'unité d'exécution est en outre configurée pour : après que l'unité de jugement a jugé que la demande d'annulation de mode d'exclusion est une demande envoyée par le premier dispositif de commande, annuler le mode d'exclusion.

11. Dispositif de réseau selon la revendication 8, dans lequel :
l'unité de réception est en outre configurée pour recevoir une demande d'annulation de mode d'exclusion ;
l'unité de jugement est en outre configurée pour : dans le délai valide du mode d'exclusion, juger si la demande d'annulation de mode d'exclusion est ou non une demande envoyée par un dispositif de commande dont le niveau d'accès est supérieur à un niveau d'accès du premier dispositif de commande ; et
l'unité d'exécution est en outre configurée pour : après que l'unité de jugement a jugé que la demande d'annulation de mode d'exclusion est une demande envoyée par un dispositif de commande dont le niveau d'accès est supérieur à un niveau d'accès du premier dispositif de commande, annuler le mode d'exclusion.

12. Dispositif de réseau selon la revendication 8, dans lequel :
l'unité de réception est en outre configurée pour recevoir une information de la condition d'exclusion dans la demande de commande d'exclusion envoyée par le premier dispositif de commande ; et le dispositif de réseau comprend en outre :
une unité de détermination de condition d'exclusion, configurée pour déterminer la condition d'exclusion selon l'information de condition d'exclusion.

13. Dispositif de réseau selon la revendication 12, dans lequel l'information de la condition d'exclusion comprend une information d'interface d'accès d'exclusion, et le dispositif de réseau comprend en outre :
une unité de détermination d'interface d'accès, configurée pour : déterminer une interface à laquelle l'accès est demandé par la première demande d'accès, et notifier un résultat de détermination à l'unité d'exécution ; et
l'unité d'exécution comprend :
une sous-unité d'exécution d'exclusion, configurée pour : quand un résultat de jugement de l'unité de jugement indique que la première demande d'accès est une demande d'accès envoyée par le premier dispositif de commande, exécuter la première demande d'accès ; et
une sous-unité d'exécution de condition, configurée pour : quand le résultat de jugement de l'unité de jugement indique que la première demande d'accès n'est pas une demande d'accès envoyée par le premier dispositif de commande, et le résultat de détermination de l'unité de détermination d'interface d'accès indique que l'interface à laquelle l'accès est demandé par la première demande d'accès est comprise dans l'information d'interface d'accès d'exclusion, exécuter la première demande d'accès ; et sinon, rejeter la première demande d'accès ; ou quand le résultat de jugement de l'unité de jugement indique que la première demande d'accès n'est pas une demande d'accès envoyée par le premier dispositif de commande, et le résultat de détermination de l'unité de détermination d'interface d'accès indique que l'interface à laquelle l'accès est demandé par la première demande d'accès est comprise dans l'information d'interface d'accès d'exclusion, rejeter la première demande d'accès ; et sinon, exécuter la première demande d'accès.

14. Dispositif de réseau selon la revendication 12, dans lequel l'information de la condition d'exclusion comprend un ensemble d'informations ou un niveau d'accès spécifié d'un dispositif de commande, et l'unité d'exécution est en outre configurée pour exécuter la première demande d'accès si la première demande d'accès est une demande d'accès envoyée par un second dispositif de commande et le second dispositif de commande est compris dans l'ensemble d'informations ou un niveau d'accès du second dispositif de commande est le niveau d'accès spécifié.

15. Système de réseau, comprenant un dispositif commandé et un premier dispositif de commande ;
le premier dispositif de commande étant configuré pour envoyer une demande de commande d'exclusion et une demande d'accès au dispositif commandé ;
**caractérisé en ce que** le dispositif commandé est configuré pour : recevoir la demande de commande d'exclusion en provenance du premier dispositif de commande et entrer dans un mode d'exclusion ; recevoir une première demande d'accès, et dans un délai valide du mode d'exclusion, juger si la première demande d'accès est ou non une demande d'accès envoyée par le premier dispositif de commande ; et si la première demande d'accès est une demande d'accès envoyée par le premier dispositif de commande, exécuter la première demande d'accès ; et si la première demande d'accès n'est pas une demande d'accès envoyée par le premier dispositif de commande, déterminer, selon une condition d'exclusion, s'il faut exécuter ou non la première demande d'accès ; et exécuter la première demande d'accès si la première demande d'accès n'est pas une demande d'accès envoyée par le premier dispositif de commande et la condition d'exclusion est satisfaite ;
le dispositif commandé étant en outre configuré pour déterminer que le mode d'exclusion est dans le délai valide si le nombre enregistré de demandes d'accès en provenance du premier dispositif de commande dans le mode d'exclusion est inférieur à un nombre de demandes d'accès d'exclusion continues, le nombre de demandes d'accès d'exclusion continues étant déterminé selon une relation prédéfinie entre le premier dispositif de commande et une information du nombre de demandes d'accès continues.
